# EUROPÄISCHE PATENTSCHRIFT

(11) **EP 0 622 917 B1**
(45) Veröffentlichungstag und Bekanntmachung des Hinweises auf die Patenterteilung: **12.01.2000**
(21) Anmeldenummer: 94106463.6
(22) Anmeldetag: 26.04.1994
(51) Int. Cl.: H04H 1/00

(54) **Verfahren zur Übertragung digitaler, komprimierter Audio- und/oder Videosignale über einen Satelliten- oder Kabelkanal**
Method for transmitting digital compressed audio and/or video signals over a satellite or cable channel
Méthode pour la transmission de signaux audiovisuels numériques comprimés à travers un canal de satéllite ou de télédistribution par câble

(30) Priorität: 29.04.1993 DE 4314045
(43) Veröffentlichungstag der Anmeldung: 02.11.1994
(73) Patentinhaber: GRUNDIG Aktiengesellschaft, 90762 Fürth (DE)
(72) Erfinder: Kays, Rüdiger, Dr., Grundig E.M.V., D-90748 Fürth (DE)

(56) Entgegenhaltungen:
- EP-A- 0 501 699
- DE-A- 4 013 204
- US-A- 5 138 440
- IEEE JOURNAL ON SELECTED AREAS IN COMMUNICATIONS, Bd.11, Nr.1, Januar 1993, NEW YORK US Seiten 88 - 89 ROBERT J. SIRACUSA, KURIACOSE JOSEPH, JOEL ZDEPSKI, DIPANKAR RAYCHAUDHURI 'Flexible and robust packet transport for digital HDTV'

## Beschreibung

Die Erfindung betrifft ein Verfahren zur Übertragung digitaler, komprimierter Audio- und/oder Videosignale über einen Satelliten- oder Kabelkanal mit den im Oberbegriff des Anspruchs 1 angegebenen Merkmalen.

In der Zeitschrift Fernseh- und Kino-Technik, 46. Jahrgang, Nr. 9/1992, S. 559-570, sind Systemkonzepte für eine digitale, terrestrische Fernsehübertragung beschrieben. Dabei werden die in einer Kamera erzeugten Fernsehsignale nach einer Analog/Digital-Wandlung einer Quellencodierung unterworfen, die dazu dient, die Datenrate des Signals stark zu reduzieren. Dem in der Datenrate reduzierten Signal werden im nächsten Schritt mittels eines Multiplexers digitale Zusatzinformationen hinzugefügt, wie beispielsweise digitale Audiosignale. Das so erhaltene Signal wird zur optimalen Anpassung des Signals an den zur Verfügung stehenden Kanal einer Kanalcodierung und - modulation zugeführt. Bei der Kanalcodierung wird dem Signal Redundanz zugefügt, um empfangsseitig Übertragungsfehler erkennen und korrigieren zu können. Durch die Kanalmodulation wird der erhaltene Datenstrom in ein 8-MHz-Band umgesetzt. Dieses kann nach einer Frequenzumsetzung beispielsweise über einen UHF-Kanal übertragen werden. Empfangsseitig erfolgt eine Umsetzung des HF-Signals in das Basisband, eine digitale Demodulation, eine Kanaldecodierung, eine Abtrennung der digitalen Zusatzinformationen vom Fernsehsignal und eine Quellendecodierung.

Aus der DE-A1-35 11 430 ist ein Verfahren zur Synchronisierung der Empfangseinrichtungen in einem digitalen Multiplex-Übertragungssystem, insbesondere einem digitalen Funkübertragungssystem bekannt. Bei diesem bekannten Verfahren, bei welchem unterschiedliche Sätze von Datensymbolen blockweise und zeitsynchron zueinander gesendet werden, werden zwischen den Datensymbolen in definierten Abständen Synchronisiersymbole eingeblendet, welche in mehreren Nachrichtenkanälen gleichzeitig gesendet werden und untereinander identisch sind. Empfangsseitig wird durch Auswertung der zeitlichen Lage der empfangenen Synchronisiersymbole auf die zeitliche Lage des Blockanfangs der Datensymbole geschlossen.

Aus der DE-A1-36 42 982 ist ein System zur Übertragung und zum Empfang digitalisierter Audiosignale bekannt, bei dem Datenfolgen in Rahmen zeitlich nacheinander angeordnet sind. Bei diesem bekannten System wird vor der Übertragung das digitalisierte Audiosignal in ein das Kurzzeit-Spektrum darstellendes Signal umgewandelt und Anteile dieses Signals auf Basis psychoakustischer Gesetzmäßigkeiten bei der Codierung des zu übertragenden digitalen Audiosignals in ihrer Darstellungsgenauigkeit verschieden gewichtet.

Aus der DE-A1-38 17 864 ist ein Verfahren zur Übertragung eines Audiosignals bekannt, wobei das Audiosignal durch Zeitfenster in zeitlich aufeinanderfolgende Blöcke und Unterblöcke aufgeteilt wird und bei Pegeländerungen von einem Block zum anderen, die einen vorgegebenen Wert überschreiten, die Signale in den Unterblöcken vor einer Transformation in ein Kurzzeitspektrum einer Kompression und nach der Rücktransformation einer Expansion unterzogen werden.

Aus DE-A-40 13 204 ist ein Verfahren zur Übertragung mehrerer digital codierter Ton-, Bild- oder Datensignale in einem Gesamtdatenstrom bekannt. Die einzelnen oder alle Signale können zeitlich variirende Datenraten aufweisen. Jedes einzelne codierte Signal wird in ein erstes Teilsignal mit begrenzter Nutzdatenbreite und in ein zweites Teilsignal mit den verbleibenden Nutzdaten aufgeteilt. Mehrere oder alle zweiten Teilsignale werden wiederum zu einem gemeinsamen ergänzenden Signal zusammengefaßt.

Die Aufgabe der Erfindung besteht darin, ein neues Verfahren zur Übertragung digitaler, komprimierter Audio- und/oder Videosignale über einen Satelliten- oder Kabelkanal anzugeben.

Diese Aufgabe wird bei einem Verfahren mit den im Oberbegriff des Anspruchs 1 angegebenen Merkmalen durch die im kennzeichnenden Teil des Anspruchs 1 angegebenen Merkmale gelöst.

Vorteilhafte Weiterbildungen ergeben sich aus den abhängigen Patentansprüchen.

Beim beanspruchten Verfahren erfolgt in vorteilhafter Weise eine Übertragung eines oder mehrerer Rundfunkprogramme in sog. Teildatenströmen, so daß der Kanal flexibel nutzbar ist. So können beispielsweise über einen Kanal ein einziges, hochqualitatives Fernsehsignal oder mehrere Fernseh- und/oder Audiosignale mit niedrigerer Qualität übertragen werden.

Im folgenden wird die Erfindung anhand der Figuren beispielsweise erläutert.

Es zeigt:
- Fig. 1: das Grundprinzip der Kanalaufteilung für mehrere Programme,
- Fig. 2: ein Ausführungsbeispiel für den Aufbau eines Teildatenstroms und
- Fig. 3: ein Blockschaltbild zur Veranschaulichung der automatischen Zuordnung der Anzahl der Teildatenströme zu zwei über einen Satelliten- oder Kabelkanal übertragenen Rundfunkprogrammen.

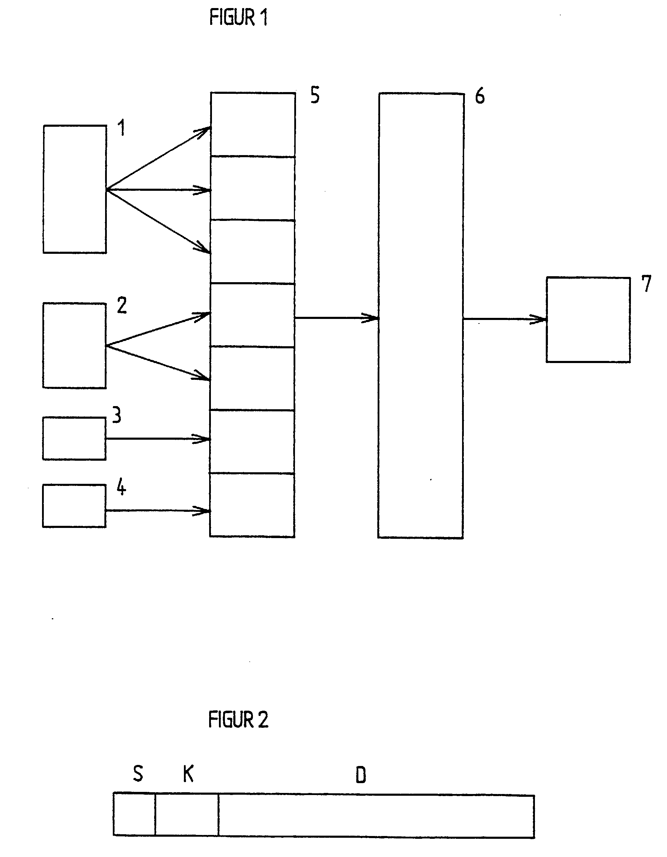

Die Fig. 1 zeigt das Grundprinzip der Kanalaufteilung für mehrere Rundfunkprogramme. Von Rundfunksendern 1, 2, 3 und 4 werden Rundfunkprogramme in Form von digitalen, komprimierten Video- und Audiosignalen zur Verfügung gestellt. Bei den Sendern 1 und 2 handelt es sich um Fernsehsender, bei den Sendern 3 und 4 um Hörrundfunksender. Vom Fernsehsender 1 wird ein Fernsehsignal hoher Qualität und vom Fernsehsender 2 ein Fernsehsignal mittlerer Qualität zur Verfügung gestellt.

Für die Übertragung über einen Satelliten- oder Kabelkanal 5 werden die genannten komprimierten Video- und Audiosignale in Teildatenströme aufgeteilt. Vorzugsweise wird die Kapazität eines Teildatenstroms so gewählt, daß in einem Teildatenstrom die Übertragung eines komprimierten Audiosignals, insbesondere eines Stereo-Audiosignals, möglich ist. Bevorzugte Werte für die Datenrate eines Teildatenstroms sind 128 KBit pro Sekunde oder 192 KBit pro Sekunde.

Jeder Teildatenstrom wird in Form von einzelnen Rahmen übertragen.

Die Figur 2 zeigt ein Ausführungsbeispiel für den Aufbau eines derartigen Rahmens. Der gezeigte Rahmen weist Synchronisierbits S, Datenkennungsbits K und mit Fehlerkorrekturbits ergänzte Datenbits D auf. Die Datenkennungsbits geben Auskunft über den dem Rahmen und damit dem Teildatenstrom zugehörigen Sender, beispielsweise ARD, und über die Art der im Rahmen bzw. Teildatenstrom übertragenen Daten. Mögliche Datenarten sind beispielsweise Videodaten, Audiodaten, Teletextdaten, verschlüsselte Daten, usw.

Die Länge der über den Kanal übertragenen Rahmen ist entweder fest und für alle Teildatenströme gleich oder sie ist unterschiedlich. Im letztgenannten Fall wird die Länge jedes Rahmens durch eine in den Datenkennungsbits des jeweiligen Rahmens enthaltene Zusatzinformation angegeben. Die optimale Rahmenlänge hängt davon ab, wie schnell die weiter unter beschriebene Systemsteuerung auf die jeweils vorliegenden Übertragungsanforderungen reagieren soll. Vorteilhafte Werte für die optimale Rahmenlänge liegen zwischen 10 und 1000 ms.

Bei dem in Fig. 1 gezeigten Ausführungsbeispiel werden dem im Sender 1 erzeugten Fernsehprogramm drei Teildatenströme, dem im Sender 2 erzeugten Fernsehprogramm zwei Teildatenströme und den in den Sendern 3 und 4 erzeugten Hörrundfunkprogrammen jeweils ein Teildatenstrom zugeordnet.

Diese Teildatenströme werden entweder im Frequenz- oder im Zeitmultiplex über den Satelliten- oder Kabelkanal 5 übertragen.

Diese Übertragung erfolgt in vorteilhafter Weise nach einer der folgenden Ausführungsformen:
- Die digitalen komprimierten Audio- und Videosignale werden als Kanalmodulation einer 4 PSK-Modulation unterworfen und die modulierten Signale werden im Zeitmultiplex übertragen.
- Die digitalen komprimierten Audio- und Videosignale werden als Kanalmodulation einer 8 PSK-Modulation mit Trelliscodierung unterworfen.
- Die digitalen komprimierten Audio- und Videosignale werden einer schmalbandigen Kanalmodulation unterworfen und mittels OFDM-Verfahren im Frequenzmultiplex übertragen.

Empfangsseitig ist ein Demultiplexer 6 vorgesehen, mittels welchem aus dem empfangenen Datenstrom das vom Benutzer gewünschte Rundfunkprogramm unter Verwendung der in den Teildatenströmen enthaltenen Datenkennungsbits extrahiert wird. Nach einer Dekomprimierung der extrahierten Signale und einer Digital/Analog-Wandlung erfolgt die Wiedergabe des Signals mittels eines Bild- oder Tonwiedergabegerätes 7.

Gemäß einer vorteilhaften Ausgestaltung der Erfindung werden eines oder mehrere der Rundfunkprogramme sendeseitig verschlüsselt und können nur von berechtigten Empfängern entschlüsselt werden . Die Entschlüsselung erfolgt entweder nach Eingabe einer Codezahl oder nach einer Freischaltung durch den Sender.

Bei dem vorstehend beschriebenen Ausführungsbeispiel waren dem vom Sender 1 erzeugten Signal drei Teildatenströme, dem vom Sender 2 erzeugten Signal zwei Teildatenströme und den von den Sendern 3 und 4 erzeugten Signalen jeweils ein Teildatenstrom zugeordnet.

Gemäß der Erfindung ist die Zuordnung der Anzahl der Teildatenströme zu den über den Satelliten- oder Kabelkanal übertragenen Rundfunkprogrammen variabel.

So kann beispielsweise eine manuelle Änderung der Zuordnung erfolgen, wenn vom Sender 4 nunmehr statt eines Hörrundfunkprogramms ein Fernsehprogramm mittlerer Qualität und vom Sender 1 statt eines Fernsehprogramms hoher Qualität ein Hörrundfunkprogramm übertragen werden soll.

Dabei muß selbstverständlich darauf geachtet werden, daß die maximal vorhandene Übertragungskapazität nicht überschritten wird.

Alternativ dazu kann die Änderung der Zuordnung der Anzahl der Teildatenströme zu den einzelnen Rundfunkprogrammen auch automatisch vorgenommen werden, wobei diese Änderung der Zuordnung in Echtheit bzw. Rahmen für Rahmen erfolgen kann.

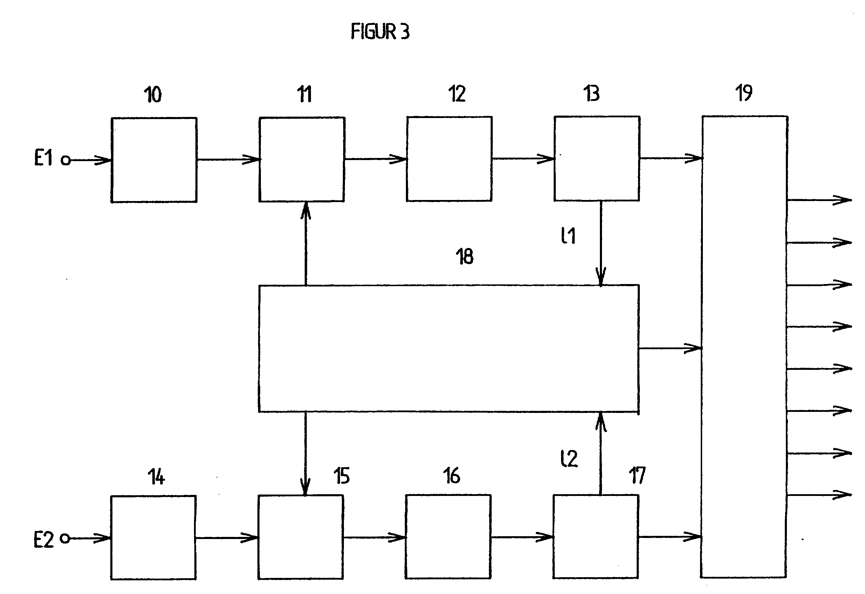

Diese automatische Änderung der Zuordnung wird im folgenden anhand des in der Figur 3 gezeigten Ausführungsbeispiels näher erläutert.

Bei diesem Ausführungsbeispiel wird davon ausgegeangen, daß zwei Rundfunkprogramme über den Satelliten- bzw. Kabelkanal übertragen werden sollen. Der dem ersten Rundfunkprogramm entsprechende Datenstrom liegt am Eingang E1 und der dem zweiten Rundfunkprogramm entsprechende Datenstrom am Eingang E2 des gezeigten Blockschaltbildes an.

Jeder dieser Datenströme wird einer Datenreduktion bzw. Quellencodierung unterworfen.

Dabei wird der dem ersten Rundfunkprogramm entsprechende Datenstrom zunächst einer Schaltung 10 zugeführt, in welcher eine diskrete Cosinus-Transformation erfolgt. Das Ausgangssignal der Schaltung 10 wird einem Quantisierer 11 zugeführt, dessen Quantisierungsgenauigkeit von einer Systemsteuerung 18 gesteuert wird. Das Ausgangssignal des Quantisierers 11 wird einen Lauflängencodierer 12 zugeführt, dessen Ausgangssignal in einem Datenpuffer 13 abgespeichert wird.

Der dem zweiten Rundfunkprogramm entsprechende Datenstrom wird zunächst einer Schaltung 14 zugeführt, in welcher ebenfalls eine diskrete Cosinus-Transformation erfolgt. Das Ausgangssignal der Schaltung 14 wird einem Quantisierer 15 zugeführt, dessen Quantisierungsgenauigkeit ebenfalls von der Systemsteuerung 18 gesteuert wird. Das Ausgangssignal des Quantisierers 15 wird einem Lauflängencodierer 16 zugeführt, dessen Ausgangssignal in einem Datenpuffer 17 abgespeichert wird.

Die Ausgangssignale der Datenpuffer 13 und 17 werden einer Schaltung 19 zur automatischen Teilkanalzuweisung zugeführt. Diese wird von der Systemsteuerung 18 gesteuert. Die Steuerung erfolgt in Ansprache auf die Füllstände der Datenpuffer 13 und 17, welche über die Verbindungen 11 und 12 der Systemsteuerung 18 mitgeteilt werden. Die Systemsteuerung steuert weiterhin - wie bereits oben angesprochen - ebenfalls in Ansprache auf die Füllstände der Datenpuffer 13 und 17 die Quantisierungsgenauigkeit der Quantisierer 11 und 15.

Handelt es sich beispielsweise bei dem am Eingang E1 vorliegenden ersten Rundfunkprogramm um ein Fernsehsignal hoher Qualität und bei dem am Eingang E2 vorliegenden zweiten Rundfunkprogramm um ein Fernsehsignal mit mittlerer Qualität, dann wird der Füllstand des Datenpuffers 13 schneller ansteigen als der Füllstand des Datenpuffers 17. Dies wird von der Systemsteuerung 18 erkannt, welche daraufhin die Anzahl der dem ersten Rundfunkprogramm zugeordneten Teilkanäle entsprechend erhöht.

Sind sämtliche zur Verfügung stehenden Teilkanäle bereits zugeordnet, dann können die Füllstände der Datenpuffer 13 und 17 dadurch verringert werden, daß die Quantisierungsgenauigkeit der Quantisierer 11 und 15 entsprechend verringert wird.

Alternativ zu der vorstehend beschriebenen Ausführungsform, bei der die Systemsteuerung die automatische Teilkanalzuweisung in Abhängigkeit von den Füllständen der Datenpuffer 13 und 17 vornimmt, ist es auch möglich, andere Kriterien für die automatische Teilkanalzuordnung zu verwenden. Beispielsweise kann eine gebührengesteuerte Teilkanalzuordnung erfolgen. Dabei werden Sendern, die bereit sind, eine höhere Gebühr zu zahlen, höhere Prioritäten bei der Teilkanalzuordnung eingeräumt als anderen Sendern.

Eine vorteilhafte Weiterbildung der Erfindung besteht darin, in der Systemsteuerung 18 die von jedem Sender bzw. Programmanbieter in Anspruch genommene Übertragungskapazität aufzusummieren und beispielsweise monatlich in Rechnung zu stellen.

## Patentansprüche

1. Verfahren zur Übertragung digitaler, komprimierter Audio- und/oder Videosignale über einen Satelliten- oder Kabelkanal, wobei die Audio- und/oder Videosignale einem oder mehreren Rundfunkprogrammen zugeordnet sind, der über den Satelliten- oder Kabelkanal übertragene digitale Datenstrom in mehrere Teildatenströme aufgeteilt wird, die Teildatenströme im Frequenz- oder Zeitmultiplex übertragen werden und die Zuordnung der Anzahl der Teildatenströme zu den über den Satelliten- oder Kabelkanal übertragenen Rundfunkprogrammen variabel ist,
**dadurch gekennzeichnet, daß**
bei der Datenkompression der Audio- und/oder Videosignale eine adaptive Quantisierung, eine Lauflängencodierung und eine Abspeicherung in Pufferspeichern erfolgt, eine Messung der Füllstände der Pufferspeicher vorgenommen wird, die adaptive Quantisierung jeweils in Abhängigkeit von den Füllständen der Pufferspeicher erfolgt und die automatische Zuordnung der Anzahl der Teildatenströme zu den über den Satelliten- oder Kabelkanal übertragenen Rundfunkprogrammen durch die Auswertung mindestens zweier Füllstandsmessungen vorgenommen wird.

2. Verfahren nach Anspruch 1,
**dadurch gekennzeichnet, daß**
die Kapazität eines Teildatenstroms so gewählt wird, daß in einem Teildatenstrom die Übertragung eines komprimierten Audiosignals möglich ist.

3. Verfahren nach einem oder mehreren der vorhergehenden Ansprüche,
**dadurch gekennzeichnet, daß**
die Zuordnung der Anzahl der Teildatenströme zu den über den Satelliten- oder Kabelkanal übertragenen Rundfunkprogrammen automatisch erfolgt.

4. Verfahren nach Anspruch 1,
**dadurch gekennzeichnet, daß**
die adaptive Quantisierung und die automatische Zuordnung der Anzahl der Teildatenströme für mindestens zwei in einem Kanal zu übertragende Audio- und/oder Videosignale durch eine gemeinsame Steuereinheit erfolgt, welcher die Informationen über die Pufferfüllstände zugeführt werden.

5. Verfahren nach einem oder mehreren der vorhergehenden Ansprüche,
**dadurch gekennzeichnet, daß**
eine automatische Ermittlung der von jedem Rundfunkprogramm in Anspruch genommenen Übertragungskapazität erfolgt und dem Programmanbieter in Rechnung gestellt wird.

6. Verfahren nach einem oder mehreren der vorherigen Ansprüche,
**dadurch gekennzeichnet, daß**
digitale komprimierte Audio- und/oder Videosignale einer 4PSK-Modulation unterworfen und die modulierten Signale im Zeitmultiplex übertragen werden.

7. Verfahren nach einem oder mehreren der Ansprüche 1 bis 5,
**dadurch gekennzeichnet, daß**
digitale komprimierte Audio- und/oder Videosignale einer 8PSK-Modulation mit Trelliscodierung unterworfen werden.

8. Verfahren nach einem oder mehreren der Ansprüche 1 bis 5,
**dadurch gekennzeichnet, daß**
digitale komprimierte Audio- und/oder Videosignale einem OFDM-Multiplex unterworfen werden.

9. Verfahren nach einem oder mehreren der vorhergehenden Ansprüche,
**dadurch gekennzeichnet, daß**
eines oder mehrere der Rundfunkprogramme sendeseitig verschlüsselt und empfangsseitig entschlüsselt werden.

10. Verfahren nach Anspruch 9,
**dadurch gekennzeichnet, daß**
die empfangsseitige Entschlüsselung nur nach Eingabe einer Codezahl oder nach einer Freischaltung durch den Sender erfolgt.

11. Verfahren nach einem oder mehreren der vorhergehenden Ansprüche,
**dadurch gekennzeichnet, daß**
die Teildatenströme in Form von einzelnen Rahmen übertragen werden.

12. Verfahren nach Anspruch 11,
**dadurch gekennzeichnet, daß**
die Länge der einzelnen Rahmen variabel ist und durch eine in Datenkennungsbits enthaltene Zusatzinformation angegeben wird.

## Claims

1. Method for transmitting digital compressed audio and/or video signals over a satellite or cable channel, wherein the audio and/or video signals are assigned to one or more radio programmes, the digital data stream transmitted via the satellite or cable channel is divided into a plurality of component data streams, the component data streams are transmitted in frequency-division multiplex or time-division multiplex and the assignment of the number of component data streams to the radio programmes transmitted over the satellite or cable channel is variable, characterized in that, in the data compression of the audio and/or video signals, an adaptive quantization, a run length coding and a storage in buffer memories takes place, the occupancies of the buffer memories are measured, the adaptive quantization takes place in this case as a function of the occupancies of the buffer memories and the number of component data streams is automatically assigned to the radio programmes transmitted over the satellite or cable channel by evaluating at least two occupancy measurements.

2. Method according to Claim 1, characterized in that the capacity of a component data stream is chosen so that the transmission of a compressed audio signal is possible in a component data stream.

3. Method according to one or more of the preceding claims, characterized in that the number of component data streams is automatically assigned to the radio programmes transmitted over the satellite or cable channel.

4. Method according to Claim 1, characterized in that the adaptive quantization and the automatic assignment of the number of component data streams takes place for at least two audio and/or video signals to be transmitted in a channel by means of a common control unit to which the items of information relating to the buffer occupancies are fed.

5. Method according to one or more of the preceding claims, characterized in that the transmission capacity occupied by each radio programme is automatically determined and is charged to the programme provider.

6. Method according to one or more of the preceding claims, characterized in that digital compressed audio and/or video signals are subjected to a 4PSK modulation and the modulated signals are transmitted in time-division multiplex.

7. Method according to one or more of Claims 1 to 5, characterized in that digital compressed audio and/or video signals are subjected to an 8PSK modulation with trellis coding.

8. Method according to one or more of Claims 1 to 5, characterized in that digital compressed audio and/or video signals are subjected to OFDM.

9. Method according to one or more of the preceding claims, characterized in that one or more of the radio programmes is enciphered at the transmission end and deciphered at the reception end.

10. Method according to Claim 9, characterized in that deciphering at the reception end takes place only after inputting a code number or after clearance by the transmitter.

11. Method according to one or more of the preceding claims, characterized in that the component data streams are transmitted in the form of individual frames.

12. Method according to Claim 11, characterized in that the length of the individual frames is variable and is indicated by an additional item of information contained in the data code bits.

## Revendications

1. Procédé pour la transmission de signaux audio et/ou vidéo numériques comprimés d'un canal de satellite ou de câble, selon lequel les signaux audio et/ou vidéo sont associés à un ou plusieurs programmes de diffusion, le flux de données numériques, qui est transmis par l'intermédiaire du canal du satellite ou du câble, est subdivisé en plusieurs flux de données partiels, les flux de données partiels sont transmis selon un multiplexage fréquentiel ou temporel et l'association du nombre des flux de données partiels aux programmes de diffusion transmis par l'intermédiaire du canal du satellite ou du câble est variable,
caractérisé en ce que
lors de la compression des données des signaux audio et/ou vidéo, une quantification adaptative, un codage par longueur d'exécution, une mémorisation dans des mémoires tampons sont exécutés, une mesure des états de remplissage des mémoires tampon est exécutée, la quantification adaptative s'effectue respectivement en fonction des états de remplissage des mémoires tampons et l'association automatique du nombre des flux de données partiels aux programmes de diffusion transmis par l'intermédiaire du canal du satellite ou du câble est réalisée par exploitation de deux mesures d'états de remplissage.

2. Procédé selon la revendication 1, caractérisé en ce que
la capacité d'un flux de données partiel est choisie de telle sorte que la transmission d'un signal audio comprimé est possible dans un flux de données partiel.

3. Procédé selon une ou plusieurs des revendications précédentes, caractérisé en ce que
l'association du nombre des flux de données partiels aux programmes de diffusion transmis par l'intermédiaire du canal du satellite ou du câble, s'effectue de façon
automatique.

4. Procédé selon la revendication 1, caractérisé en ce que
la quantification adaptative et l'association automatique du nombre des flux de données partiels pour au moins deux signaux audio et/ou vidéo devant être transmis dans un canal s'effectue par l'intermédiaire d'une unité commune de commande, à laquelle les informations concernant les états de remplissage des tampons sont envoyées.

5. Procédé selon une ou plusieurs des revendications précédentes, caractérisé en ce que
une détermination automatique de la capacité de transmission réclamée par chaque programme de diffusion est exécutée et est portée au compte du fournisseur de programmes.

6. Procédé selon une ou plusieurs des revendications précédentes, caractérisé en ce que
des signaux audio et/ou des signaux vidéo numériques comprimé sont soumis à une modulation 4PSK et les signaux modulés sont transmis selon un multiplexage temporel.

7. Procédé selon une ou plusieurs des revendications 1 à 5, caractérisé on ce que
des signaux audio et/ou vidéo numériques comprimés sont soumis à une modulation 8PSK avec un codage Trellis.

8. Procédé selon une ou plusieurs des revendications 1 à 5, caractérisé en ce que
des signaux audio et/ou vidéo comprimés sont soumis à un multiplexage OFDM.

9. Procédé selon une ou plusieurs des revendications précédentes, caractérisé en ce que
un ou plusieurs des programmes de diffusion sont cryptés côté émission et sont décryptés côté réception.

10. Procédé selon la revendication 9, caractérisé en ce que
le décryptage côté réception s'effectue uniquement après introduction d'un numéro de code ou après libération par l'émetteur.

11. Procédé selon une ou plusieurs des revendications précédentes, caractérisé en ce que
les flux de données partiels sont transmis sous la forme de tramas individuelles.

12. Procédé selon la revendication 11, caractérisé en ce que
la longueur des trames individuelles est variable et est indiquée par une information supplémentaire contenue dans des bits d'identification de données.
